# EUROPÄISCHE PATENTSCHRIFT

(11) **EP 2 888 153 B1**
(45) Veröffentlichungstag und Bekanntmachung des Hinweises auf die Patenterteilung: **12.04.2017**
(21) Anmeldenummer: 13732583.3
(22) Anmeldetag: 02.07.2013
(51) Int. Cl.: B62D 27/02, F16B 11/00, B62D 29/00, B62D 21/11

(54) **LAGERANORDNUNG UND ACHSTRÄGER FÜR EIN KRAFTFAHRZEUG**
BEARING ARRANGEMENT AND AXLE CARRIER FOR A MOTOR VEHICLE
ENSEMBLE PALIER ET SUPPORT D'ESSIEU POUR VÉHICULE À MOTEUR

(30) Priorität: 24.08.2012 DE 102012215102
(43) Veröffentlichungstag der Anmeldung: 01.07.2015
(73) Patentinhaber: Bayerische Motoren Werke Aktiengesellschaft, 80809 München (DE)
(72) Erfinder: KELLER, David, 80638 München (DE); LOTZ, Markus, 82054 Sauerlach (DE); ZANDER, Jörg, CH-8645Jona (CH)
(86) Internationale Anmeldenummer: PCT/EP2013/063937
(87) Internationale Veröffentlichungsnummer: WO 2014/029541

(56) Entgegenhaltungen:
- EP-B1- 1 313 639
- DE-A1- 19 922 800
- DE-A1-102010 055 949
- FR-A1- 2 572 788
- FR-A1- 2 967 092
- US-A1- 2011 285 102

## Beschreibung

Vorliegende Erfindung betrifft eine Lageranordnung für ein Kraftfahrzeug nach dem Oberbegriff des Anspruchs 1 sowie einen Achsträger, in dem eine erfindungsgemäße Lageranordnung ausgebildet ist.

In Kraftfahrzeugen, insbesondere in der Karosserie oder im Fahrwerk, werden vermehrt gewichtsoptimierte Träger aus faserverstärktem Kunststoff eingesetzt. An diesen Trägern aus faserverstärktem Kunststoff müssen weitere Komponenten des Kraftfahrzeugs, beispielsweise ein Getriebe, aufgehängt bzw. gelagert werden.

Grundsätzlich bekannt ist das Verkleben von Lagerböcken an solchen Trägern beispielsweise aus der EP 1 313 639 B1 oder der FR 2 967 092 A, wobei beim letztgenannten Stand der Technik der Festigkeit der Klebeverbindung weniger vertraut wird und zusätzlich eine tragende Schraubverbindung vorgesehen ist.
Aufgabe vorliegender Erfindung ist es, eine Lageranordnung sowie einen Achsträger mit der Lageranordnung für ein Kraftfahrzeug anzugeben, die bei kostengünstiger Herstellung und Montage eine wartungsarme und insbesondere betriebssichere Lagerung an einem Träger aus faserverstärktem Kunststoff ermöglichen.
Die Lösung der Aufgabe erfolgt durch die Merkmale des Anspruchs 1. Die Unteransprüche haben bevorzugte Weiterbildungen der Erfindung zum Gegenstand.
Somit wird die Aufgabe gelöst durch eine Lageranordnung für ein Kraftfahrzeug, umfassend einen Träger aus faserverstärktem Kunststoff, vorzugsweise aus CFK, und einen an dem Träger angeklebten Lagerbock, vorzugsweise aus Metall. Der Lagerbock weist eine Klebefläche auf. Mit dieser Klebefläche ist der Lagerbock am Träger angeklebt. Des Weiteren ist am Lagerbock eine Lageraufnahme ausgebildet. In diese Lageraufnahme kann beispielsweise ein Gummilager zur Lagerung eines Getriebes eingesetzt werden. Erfindungsgemäß ist der Lagerbock zweiteilig aufgebaut und weist somit einen ersten Teil und einen zweiten Teil auf. Die Aufteilung in die beiden Teile erfolgt dabei derart, dass auch die Klebefläche auf die beiden Teile aufgeteilt ist. Dadurch ist es möglich, die Klebefläche so auszugestalten, dass beim Ankleben keine scherende Belastung auf den Klebstoff im Klebespalt wirkt. Dies hat den Vorteil, dass beim Ankleben des Lagerbocks an den Träger der Klebstoff im Klebespalt nicht verdrängt wird und somit ein einheitlich dicker Klebespalt gewährleistet werden kann.

Würde man eine U-förmige Klebefläche einteilig ausgestalten, so wird der Klebstoff beim Zusammensetzen des Lagerbocks mit dem Träger an den Flanken der U-Form scherend belastet. Dies hat zur Folge, dass der Klebstoff an den Flanken verdrängt wird, wodurch keine einheitliche Verteilung des Klebstoffes bzw. kein einheitlich dicker Klebespalt gewährleistet werden kann. Im Gegensatz dazu ist erfindungsgemäß die Aufteilung der Klebeflächen auf das erste und das zweite Teil des Lagerbocks vorgesehen, so dass ein Ankleben mit möglichst einheitlichem Klebespalt und einheitlicher Verteilung des Klebstoffes möglich ist.

Im Hinblick auf eine einfache Herstellbarkeit ist die Klebefläche nämlich nicht vollumfänglich um den Träger ausgebildet. Die Klebung unterstützt somit nicht etwa einen Formschluss zwischen Lagerbock und Träger, sondern die Klebung stellt die primäre Verbindung dar. Dabei weisen beide Teile des Lagerbocks zwei zueinander abgewinkelte Teilflächen auf. Es sind also insgesamt vier Teilflächen vorgesehen. Diese vier Teilflächen bilden im Gesamten die Klebefläche. Die beiden Teilflächen eines Teils des Lagerbocks sind besonders bevorzugt um mindestens 90° zueinander abgewinkelt. Diese Abwinkelung um zumindest 90° hat den Vorteil, dass der Klebstoff beim Zusammenfügen von Lagerbock und Träger möglichst wenig verdrängt wird. Besonders bevorzugt ist vorgesehen, dass auch die Lageraufnahme auf die beiden Teile des Lagerbocks aufgeteilt ist. Die Lageraufnahme ist insbesondere als Durchgangsloch, beispielsweise als zylindrische Ausnehmung, ausgebildet. Bevorzugt weist jedes Teil des Lagerbocks ein Durchgangsloch auf, wobei die Durchgangslöcher fluchtend aneinander liegen.
Des Weiteren ist bevorzugt vorgesehen, dass die beiden Teile des Lagerbocks symmetrisch zueinander sind. Dadurch ist in etwa eine hälftige Aufteilung gegeben und die Kräfte verteilen sich relativ gleich auf die beiden Teile.

Die Erfindung umfasst des Weiteren einen Achsträger für ein Kraftfahrzeug, umfassend zumindest eine der soeben beschriebenen Lageranordnungen. Die vorteilhaften Ausgestaltungen und Unteransprüche, wie sie im Rahmen der Lageranordnung beschrieben wurden, finden entsprechend vorteilhafte Anwendung auf den erfindungsgemäßen Achsträger. In dem erfindungsgemäßen Achsträger ist der oben beschriebene Träger aus faserverstärktem Kunststoff als Querträger ausgebildet. Es ist zumindest einer dieser Querträger vorgesehen. Die Querträger verbinden dabei zwei parallele Längsträger des Achsträgers. Im Achsträger wird der Lagerbock zur Lagerung eines Getriebes, insbesondere eines Hinterachsgetriebes, verwendet.

Weitere Einzelheiten, Merkmale und Vorteile der Erfindung ergeben sich aus der nachfolgenden Beschreibung und den Figuren. Es zeigen:
- Figur 1: einen erfindungsgemäßen Achsträger mit einer erfindungsgemäßen Lageranordnung gemäß einem ersten Ausführungsbeispiel,
- Figur 2: ein Detail aus Figur 1, und
- Figur 3: einen Schnitt durch einen erfindungsgemäßen Achsträger mit einer erfindungsgemäßen Lageranordnung gemäß einem zweiten Ausführungsbeispiel.

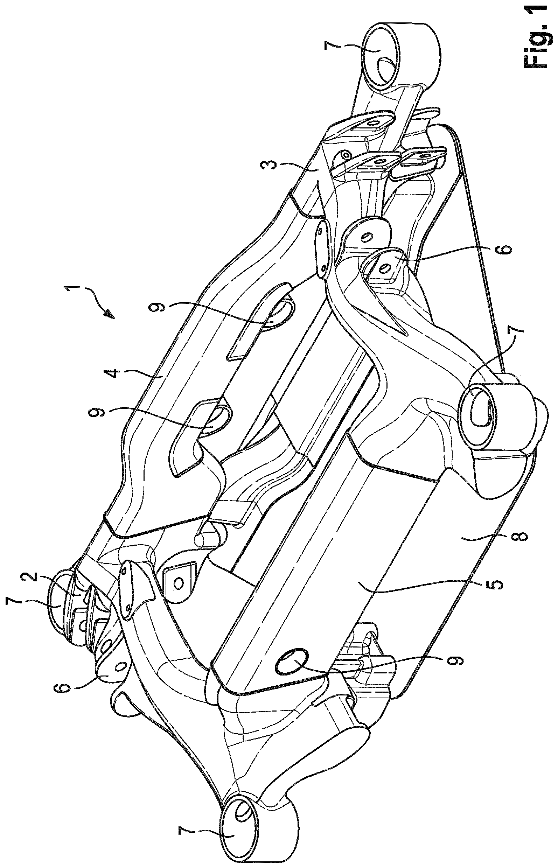

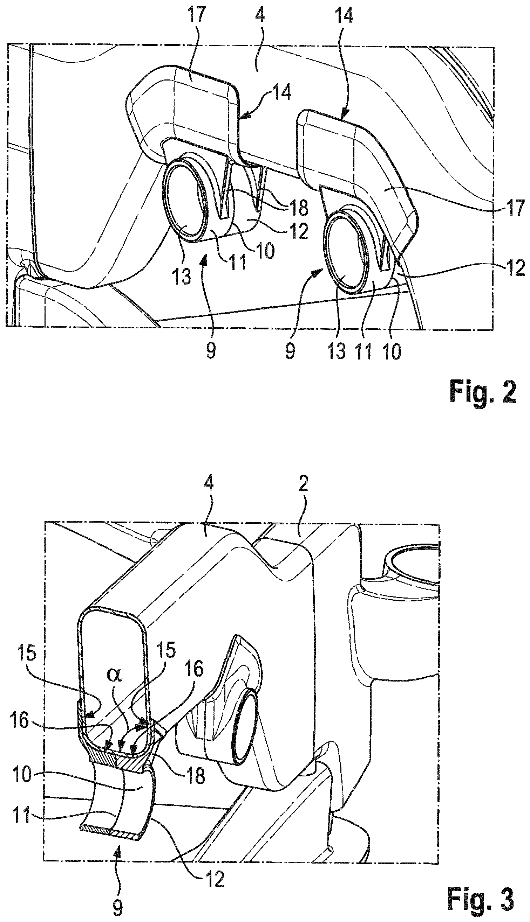

Im Folgenden wird anhand der Figuren 1 und 2 ein erstes Ausführungsbeispiel einer Lageranordnung beschrieben. Die Lageranordnung ist dabei an einem Achsträger 1 ausgebildet.

Der Achsträger 1 umfasst einen bezüglich der Fahrzeugorientierung linken Längsträger 2 und einen rechten Längsträger 3. Die beiden Längsträger 2, 3 sind aus Aluminiumguss gefertigt. Die beiden Längsträger 2, 3 werden durch einen vorderen Querträger 4 und einen hinteren Querträger 5 miteinander verbunden. Die beiden Querträger 4, 5 sind aus faserverstärktem Kunststoff gefertigt. Zur weiteren Versteifung der Anordnung sind die beiden Längsträger 2, 3 über ein Schubfeld 8, ebenfalls aus faserverstärktem Kunststoff, verbunden.

An den Längsträgern 2, 3 sind Anbindungsstellen 6 zur Anbindung von Lenkern ausgebildet. Über diese Lenker werden Räder mit dem Achsträger 1 verbunden. Des Weiteren weisen die Längsträger 2, 3 Aufnahmen 7 auf. In diese Aufnahmen 7 können Lager zur Verbindung des Achsträgers 1 mit dem Unterboden eines Kraftfahrzeugs eingesetzt werden.

Anhand des vorderen Querträgers 4 wird eine allgemein anwendbare Lageranordnung für ein Kraftfahrzeug erläutert. Entscheidend dabei ist, dass der Querträger 4 (allgemein: Träger) aus faserverstärktem Kunststoff besteht und an den Querträger 4 zumindest ein Lagerbock 9 angeklebt ist.

Figur 2 zeigt hierzu einen Detailausschnitt. Zu sehen sind die beiden Lagerblöcke 9 am Querträger 4. Jeder Lagerbock 9 setzt sich zusammen aus einem ersten Teil 11 und einem zweiten Teil 12. In Figur 2 ist eine "Trennlinie" 10 zwischen dem ersten Teil 11 und dem zweiten Teil 12 zu sehen.

Der Lagerbock 9 umfasst eine Schale 17. An der Innenfläche der Schale 17 ist eine Klebefläche 14 ausgebildet. Über diese Klebefläche 14 ist der Lagerbock 9 mit dem Querträger 4 verklebt.

Zur Aufnahme, beispielsweise einer Gummilagerung eines Getriebes, ist im Lagerbock 9 eine Lageraufnahme 13 vorgesehen. Die Lageraufnahme 13 ist als Durchgangsloch ausgebildet. Die Lageraufnahme 13 ist über Stege 18 mit der Schale 17 verbunden. Jedes der Teile 11, 12 bildet einen Bestandteil der Lageraufnahme 13, der Stege 18 und der Schale 17 mit der Klebefläche 14. Figur 3 zeigt zum zweiten Ausführungsbeispiel einen Schnitt durch einen der Lagerböcke 9. Gleiche bzw. funktional gleiche Bauteile sind in allen Ausführungsbeispielen mit denselben Bezugszeichen versehen. Der einzige Unterschied zwischen den beiden Ausführungsbeispielen ist, dass im zweiten Ausführungsbeispiel die Stege 18 vom ersten und zweiten Teil 11, 12 aneinander angrenzen, wohingegen im ersten Ausführungsbeispiel die Stege 18 beabstandet zueinander sind. Ansonsten entsprechen sich die beiden Ausführungsbeispiele, so dass folgende Ausführungen sowohl für das erste als auch für das zweite Ausführungsbeispiel gelten:
Der in Figur 3 gezeigte Schnitt zeigt, dass an jedem Teil 11, 12 jeweils eine erste Teilfläche 15 und eine zweite Teilfläche 16 ausgebildet ist. Die vier Teilflächen 15, 16 der beiden Teile 11, 12 bilden zusammen die Klebefläche14. Die gesamte Klebefläche 14 ist U-förmig ausgebildet.

Die erste Teilfläche 15 weist gegenüber der zweiten Teilfläche 16 einen Winkel α von zumindest 90° auf.

Durch die gezeigte zweiteilige Ausbildung des Lagerbocks 9 wird der im Klebespalt befindliche Klebstoff beim Zusammenkleben nicht scherend belastet, wodurch keine Verdrängung des Klebstoffes beim Zusammenfügen erfolgt. Dies hat zur Folge, dass ein definierter Abstand zwischen der Klebefläche 14 und dem Querträger 4 und somit auch eine definierte Klebstoffdicke gewährleistet ist.

### Bezugszeichenliste:

- 1: Achsträger
- 2: Linker Längsträger
- 3: Rechter Längsträger
- 4: Vorderer Querträger
- 5: Hinterer Querträger
- 6: Anbindungsstelle
- 7: Aufnahme
- 8: Schubfeld
- 9: Lagerbock
- 10: Trennlinie
- 11: Erstes Teil
- 12: Zweites Teil
- 13: Lageraufnahme
- 14: Klebefläche
- 15: Erste Teilfläche
- 16: Zweite Teilfläche
- 17: Schale
- 18: Stege
- α: Winkel

## Patentansprüche

1. Lageranordnung für ein Kraftfahrzeug, umfassend einen Träger (4) aus faserverstärktem Kunststoff und einen Lagerbock (9) mit einer Lageraufnahme (13) zum Einsetzen eines Lagers sowie Klebeflächen (14), über die der Lagerbocks (9) mit dem Träger (4) verklebt ist,
wobei der Lagerbock (9) aus einem ersten Teil (11) und einem zweiten Teil (12) zusammengesetzt und die Klebefläche (14) auf diese beiden Teile (11, 12) aufgeteilt ist,
**dadurch gekennzeichnet, dass** die Klebefläche (14) nicht vollumfänglich um den Träger (4) ausgebildet ist und dass an beiden Teilen (11, 12) jeweils genau zwei zueinander abgewinkelte Teilflächen (15, 16) als Klebeflächen (14) ausgebildet sind, so dass die gesamte Klebefläche (14) U-förmig ist.

2. Lageranordnung nach einem der vorhergehenden Ansprüche, wobei die Lageraufnahme (13) auf die beiden Teile (11, 12) aufgeteilt ist.

3. Lageranordnung nach einem der vorhergehenden Ansprüche, wobei die Lageraufnahme (13) als Durchgangsloch ausgebildet ist.

4. Lageranordnung nach einem der vorhergehenden Ansprüche, wobei die beiden Teile (11, 12) symmetrisch zueinander sind.

5. Achsträger (1) für ein Kraftfahrzeug, umfassend zumindest eine Lageranordnung nach einem der vorhergehenden Ansprüche, wobei der Träger (4) aus faserverstärktem Kunststoff als Querträger ausgebildet ist, und der Lagerbock (9) zur Lagerung eines Getriebes ausgebildet ist.

6. Achsträger nach Anspruch 5, der zumindest eine Querträger (4) zwei Längsträger (2, 3) aus Metall, vorzugsweise aus Aluminiumguss, verbindet.

## Claims

1. A bearing arrangement for a motor vehicle, comprising a support (4) comprising fibre-reinforced plastics and a bearing block (9) with a bearing seat (13) for inserting a bearing, and also adhesive surfaces (14) by which the bearing block (9) is bonded to the support (4), wherein the bearing block (9) is composed of a first part (11) and a second part (12) and the adhesive surface (14) is divided onto these two parts (11, 12), **characterised in that** the adhesive surface (14) is not formed entirely around the support (4), and **in that** exactly two partial surfaces (15, 16), which are angled relative to one another, are respectively formed as adhesive surfaces (14) on both parts (11, 12), so that the entire adhesive surface (14) is U-shaped.

2. A bearing arrangement according to any of the preceding claims, wherein the bearing seat (13) is divided onto the two parts (11, 12).

3. A bearing arrangement according to any of the preceding claims, wherein the bearing seat (13) is formed as a through hole.

4. A bearing arrangement according to any of the preceding claims, wherein the two parts (11, 12) are symmetrical to one another.

5. An axle support (1) for a motor vehicle, comprising at least one bearing arrangement according to any of the preceding claims, wherein the support (4) is configured as a cross member comprising fibre-reinforced plastics, and the bearing block (9) is configured to mount a transmission.

6. An axle support according to claim 5, the at least one cross member (4) connects two longitudinal members (2, 3) comprising metal, preferably of cast aluminium.

## Revendications

1. Agencement de palier pour un véhicule comprenant un support (4) en un matériau synthétique renforcé par des fibres et une chaise de palier (9) équipée d'un logement de réception de palier (13) permettant la mise en place d'un palier ainsi que des surfaces adhésives (14) permettant le collage de la chaise de palier (9) avec le support (4),
la chaise de palier (9) étant constituée par l'assemblage d'une première partie (11) et d'une seconde partie (12) et la surface de colle (14) étant répartie entre ces deux parties (11, 12),
**caractérisé en ce que**
la surface adhésive (14) n'est pas formée autour du support (4), sur la totalité de la périphérie et, sur les deux parties (11, 12) sont respectivement formées en tant que surfaces adhésives (14) exactement deux surfaces partielles (15, 16) coudées l'une par rapport à l'autre de sorte que la totalité de la surface adhésive (14) soit en forme de U.

2. Agencement de palier conforme à la revendication précédente, **caractérisé en ce que**
le logement de réception de palier (13) est partagé entre les deux parties (11, 12).

3. Agencement de palier conforme à l'une des revendications précédentes,
dans lequel le logement de réception de palier (13) est réalisé sous la forme d'un perçage traversant.

4. Agencement de palier conforme à l'une des revendications précédentes,
dans lequel les deux parties (11, 12) sont symétriques.

5. Support d'essieu (1) de véhicule comprenant au moins un agencement de palier conforme à l'une des revendications précédentes dans lequel le support (4) en un matériau synthétique renforcé par des fibres est réalisé sous la forme d'une traverse et la chaise de palier (9) est réalisée pour permettre le montage d'une boîte de vitesses.

6. Support d'essieu conforme à la revendication 5,
dans lequel la traverse (4) relie deux longerons (2, 3) en métal, de préférence en fonte d'aluminium.
